# FASCICULE DE BREVET EUROPEEN

(11) **EP 0 916 249 B1**
(45) Date de publication et mention de la délivrance du brevet: **16.04.2003**
(21) Numéro de dépôt: 98440245.3
(22) Date de dépôt: 02.11.1998
(51) Int. Cl.: A01D 43/10

(54) **Machine de coupe**
Mähmaschine
Cutting machine

(30) Priorité: 14.11.1997 FR 9714476
(43) Date de publication de la demande: 19.05.1999
(73) Titulaire: KUHN S.A., 67700 Saverne (FR)
(72) Inventeur: Chalancon, Jean-Marc, 67700 Saverne (FR)

(56) Documents cités:
- EP-A- 0 155 063
- EP-A- 0 269 166
- EP-A- 0 517 633
- EP-A- 0 823 199
- WO-A-81/02966
- US-A- 4 084 397

## Description

La présente invention concerne une machine de coupe comportant :
- une structure d'attelage au moyen de laquelle elle est destinée à être liée à un véhicule moteur ;
- un mécanisme de coupe comportant des organes de coupe ;
- un dispositif de traitement destiné à traiter le produit coupé par ledit mécanisme de coupe et comprenant au moins un élément rotatif;
- un dispositif d'entraînement destiné à entraîner ledit au moins un élément rotatif et comprenant une transmission sans fin laquelle comporte :
   - une première roue ;
   - une deuxième roue ;
   - au moins un élément de transmission assurant la transmission de la première roue à la deuxième roue et ;
   - une troisième roue permettant d'assurer la tension dudit au moins un élément de transmission ;
   chaque roue étant fixée à un support correspondant.

Une telle machine de coupe est décrite dans le document **EP-A-0 517 633.**

On connaît également une autre machine de coupe réalisée sous forme de faucheuse-conditionneuse. Cette faucheuse-conditionneuse comporte dans les grandes lignes une structure d'attelage au moyen de laquelle ladite faucheuse-conditionneuse peut être liée à un véhicule moteur, un mécanisme de coupe comportant des organes de coupe, un dispositif de traitement destiné à traiter le produit coupé par ledit mécanisme de coupe et comportant un élément rotatif et, un dispositif d'entraînement destiné à entraîner ledit élément rotatif.

Le dispositif d'entraînement comporte une transmission sans fin laquelle comprend une première roue, une deuxième roue, un élément de transmission assurant la transmission du mouvement de la première roue à la deuxième roue et une troisième roue permettant d'assurer la tension dudit élément de transmission.

La première roue est fixée sur un premier support qui est un arbre recevant le mouvement du véhicule moteur et à partir duquel arbre sont entraînés les organes de coupe du mécanisme de coupe et l'élément rotatif du dispositif de traitement.

La deuxième roue est fixée sur un deuxième support qui est constitué de l'une des extrémités de l'élément rotatif. La troisième roue quant à elle est fixée sur un troisième support lequel peut être déplacé dans un trou oblong pour régler la tension de l'élément de transmission.

On remarquera que, pour obtenir un travail correct, les organes de coupe du mécanisme de coupe doivent être animés à une certaine vitesse laquelle dépend directement du véhicule moteur. La vitesse de rotation de l'élément rotatif quant à lui est inférieure au régime de rotation des organes de coupe. A cet effet, le dispositif d'entraînement réduit la vitesse de rotation de l'élément rotatif par rapport à la vitesse de rotation des organes de coupe. Pour ce faire, la première roue fixée sur l'arbre moteur est diamétralement plus petite que la deuxième roue fixée sur l'élément rotatif.

Pour obtenir un traitement du produit coupé de différente qualité ou tout simplement pour pouvoir adapter le traitement à la nature du produit coupé, il est nécessaire de pouvoir changer la vitesse de rotation de l'élément rotatif du dispositif de traitement.

A cet effet, il est prévu une quatrième roue qui est de diamètre différent de celui de la deuxième roue et qui est destinée à remplacer cette dernière.

Cette machine de coupe présente cependant un certain nombre d'inconvénients. En effet, on remarquera que la quatrième roue est extérieure à la machine de coupe ce qui veut dire que cette quatrième roue n'est pas toujours à portée de main et risque même d'être égarée.

En sus, cette quatrième roue constitue une pièce supplémentaire ce qui se traduit par une hausse de coût de la machine de coupe.

L'objectif de la présente invention est de remédier aux inconvénients de cette machine de coupe connue, tout en veillant à obtenir une réalisation simple permettant d'intervenir sur la vitesse de rotation de l'élément rotatif du dispositif de traitement sans changer la vitesse de rotation des organes de coupe.

A cet effet, la machine de coupe selon la présente invention est caractérisée en ce que la troisième roue et son support correspondant présentent les mêmes caractéristiques de fixation que la première roue et / ou la deuxieme roue et son (leur) support correspondant de manière que lesdites roues concernées puissent être permutées. Ainsi l'ensemble des roues nécessaires permettant de changer le régime de rotation de l'élément de rotation est à portée de main sans pour autant devoir faire appel à une roue supplémentaire.

L'invention concerne également les caractéristiques suivantes considérées isolément ou dans toutes leurs combinaisons techniquement possibles :
- au moins les moyens de fixation liant la deuxième roue et la troisième roue au support correspondant, permettent un démontage et un remontage rapide desdites roues de / sur leur support, ce qui permet de changer relativement rapidement le régime de rotation de l'élément de rotation ;
- la machine de coupe comporte un élément d'arrêt par roue permettant de maintenir ladite roue sur le support correspondant ;
- au moins la deuxième roue et la troisième roue comportent un moyeu cannelé respectif et le deuxième support et le troisième support comportent un arbre cannelé respectif ;
- au moins le moyeu cannelé de la deuxième roue comporte le même nombre et le même type de cannelure que le moyeu cannelé de la troisième roue ;
- au moins le deuxième arbre cannelé comporte le même nombre et le même type de cannelures que le troisième arbre cannelé ;
- la troisième roue est diamétralement plus petite que la deuxième roue et diamétralement plus grande que la première roue, de ce fait, en permutant la deuxième et la troisième roue par exemple, on obtient toujours une vitesse de rotation du deuxième arbre cannelé inférieur à la vitesse de rotation de l'arbre d'entrée sur lequel est fixée la première roue, et cela que ce soit la deuxième roue ou la troisième roue qui est fixée sur ledit deuxième arbre cannelé ;
- l'axe longitudinal du deuxième arbre cannelé est confondu avec l'axe longitudinal de l' (des) élément(s) rotatifs) ;
- le troisième support peut être déplacé par rapport aux deux autres supports au moyen d'un dispositif tendeur de manière à assurer la tension de l' (des) élément(s) de transmission ;
- la première roue est motrice, la deuxième roue ou la troisième roue fixée sur le deuxième arbre cannelé est réceptrice, et la deuxième roue ou la troisième roue fixée sur le troisième arbre cannelé sert à tendre l' (les) élément(s) de transmission.

D'autres objets et caractéristiques de l'invention ressortiront de la description ci-après avec références aux dessins annexés qui représentent à titre d'exemple non limitatif, une forme de réalisation du dispositif selon l'invention.

Sur ces dessins :
- la figure 1 représente une vue de dessus d'une machine de coupe selon l'invention ;
- la figure 2 représente une vue suivant la flèche II défini sur la figure 1 sur laquelle ont été effectuées quelques coupes partielles ;
- la figure 3 représente un agrandissement partiel de la figure 2, montrant plus précisément la transmission sans fin selon une première forme d'agencement ;
- la figure 4 représente un agrandissement partiel de la figure 2, montrant plus précisément la transmission sans fin selon une deuxième forme d'agencement.

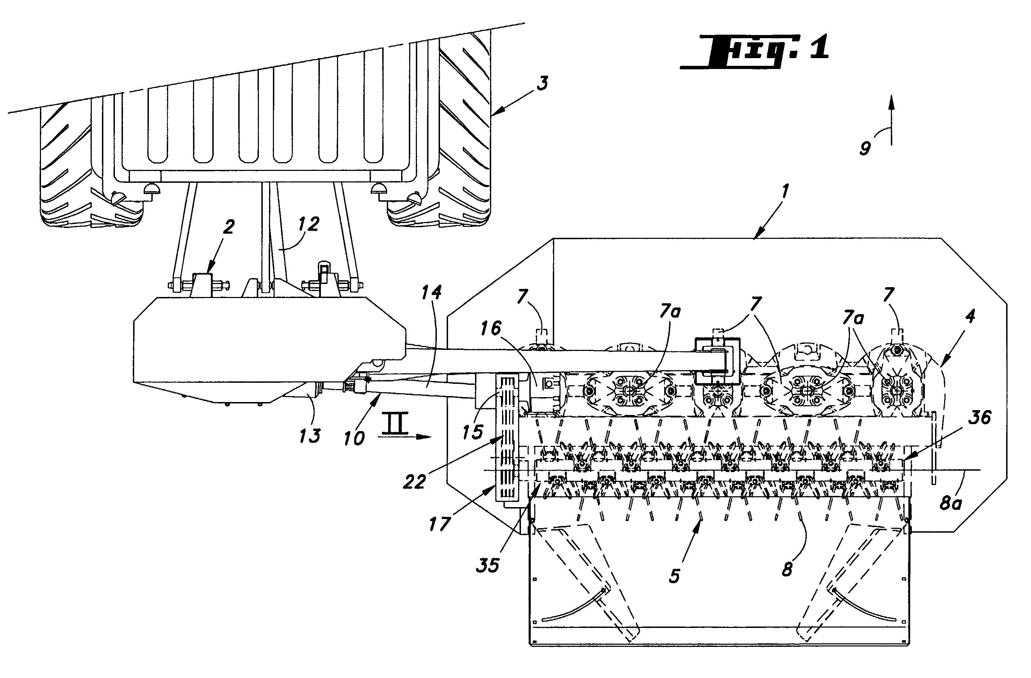

A la lumière de la figure 1, on voit une machine de coupe (1) qui comporte, selon l'exemple de réalisation représenté, une structure d'attelage (2) au moyen de laquelle elle est liée à un véhicule moteur (3).

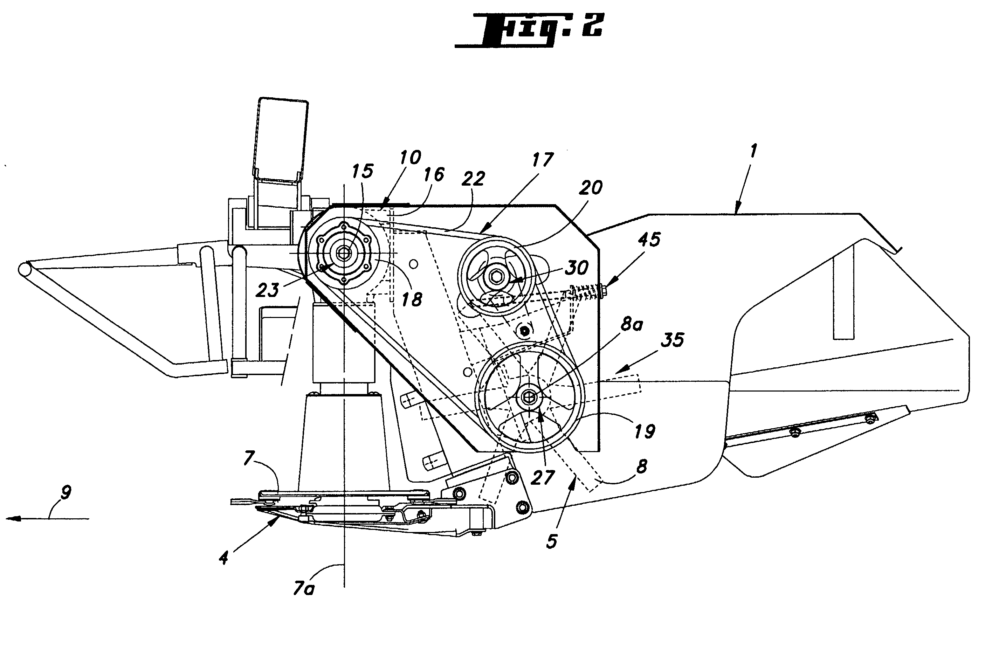

Cette machine de coupe (1) comporte également un mécanisme de coupe (4) destiné à couper un produit sur pied et un dispositif de traitement (5) destiné à traiter le produit coupé par ledit mécanisme de coupe (4). A cet effet, le mécanisme de coupe (4) comporte des organes de coupe (7) destinés chacun à être animés en rotation autour d'un axe longitudinal (7a) respectif dirigé vers le haut alors que le dispositif de traitement (5) comporte un élément rotatif (8) d'axe longitudinal (8a) s'étendant sensiblement horizontalement et transversalement à la direction d'avance (9). L'élément rotatif (8) s'étend, selon l'exemple de réalisation représenté, derrière les organes de coupe (7) et quelque peu plus haut que ceux-ci tel que représenté sur la figure 2, et il est également destiné à être animé en rotation autour de son axe longitudinal (8a). A cet effet, est en sus prévu un dispositif d'entraînement (10) (figure 1) comportant, selon l'exemple de réalisation représenté, un premier arbre de transmission (12) à joints universels lié d'une part à une prise de mouvement (non représentée) du véhicule moteur (3) et d'autre part à un premier boîtier de renvoi (13), un deuxième arbre de transmission (14) à joints universels lié d'une part audit premier boîtier de renvoi (13) et d'autre part à l'arbre d'entrée (15) d'un deuxième boîtier de renvoi (16). Ce deuxième boîtier de renvoi (16) est situé au-dessus du premier organe de coupe (7) situé le plus près de la structure d'attelage (2) et est destiné à entraîner directement ledit premier organe de coupe (7).

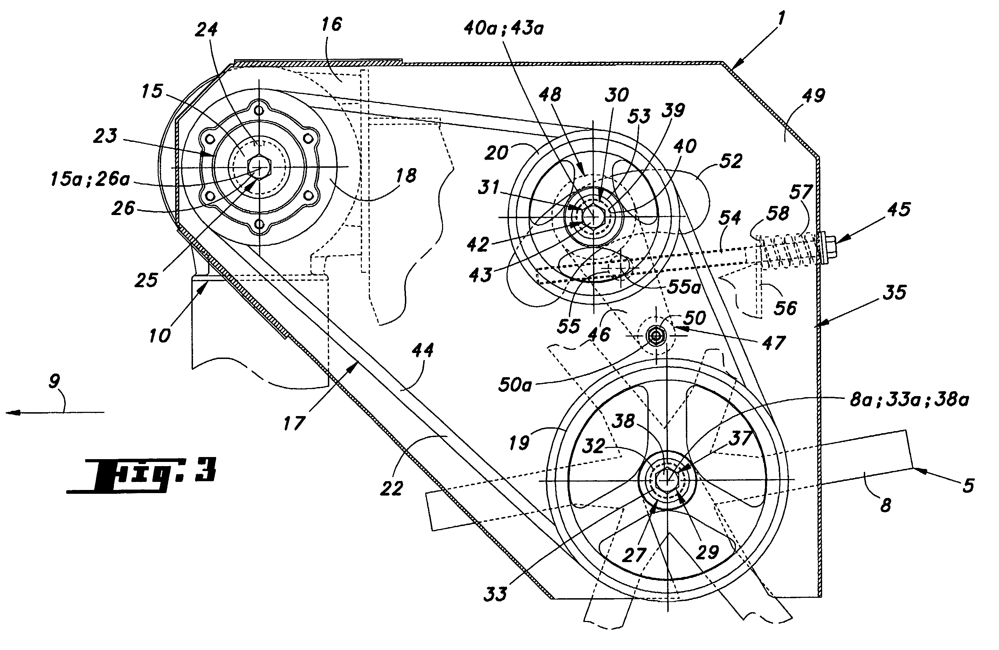

Le dispositif d'entraînement (10) est en outre destiné à entraîner l'élément rotatif (8). A cet effet, il comporte en sus une transmission sans fin (17) laquelle comporte selon l'exemple de réalisation représenté, une première roue (18), une deuxième roue (19), une troisième roue (20) et un élément de transmission (22) assurant la transmission de la première roue (18) à la deuxième roue (19) tel que représenté sur la figure 3.

A la lumière de la figure 3 on voit en sus que, selon l'exemple de réalisation représenté, la première roue (18) est fixée à un premier support (23) qui est constitué de l'arbre d'entrée (15) du deuxième boîtier de renvoi (16) au moyen d'une clavette (24) et d'un premier élément d'arrêt (25) lequel est formé d'une vis (26) d'axe longitudinal (26a) sensiblement confondu avec l'axe longitudinal (15a) dudit arbre d'entrée (15).

La deuxième roue (19) est fixée à un deuxième support (27) à l'aide d'un moyen de fixation (29) correspondant, alors que la troisième roue (20) est fixée à un troisième support (30) à l'aide d'un autre moyen de fixation (31), chacun de ces moyens de fixation (29, 31) permet un démontage et un remontage rapide desdites roues (19, 20) de / sur leur support (27, 30).

A cet effet, la deuxième roue (19) comporte, selon l'exemple de réalisation représenté, un moyeu cannelé (32), et le deuxième support (27) comporte un deuxième arbre cannelé (33) d'axe longitudinal (33a) sur lequel est monté ladite deuxième roue (19). Ce deuxième arbre cannelé (33) est situé à l'une (35) des extrémités (35, 36) de l'élément rotatif (8) (figure 1) et son axe longitudinal (33a) est confondu avec l'axe longitudinal (8a) dudit élément rotatif (8). Il est en sus prévu un deuxième élément d'arrêt (37) qui est, selon l'exemple de réalisation représenté, une vis (38) d'axe longitudinal (38a) confondu avec l'axe longitudinal (8a) et vissée dans le deuxième arbre cannelé (33). Cette vis (38) est destinée à fixer axialement la deuxième roue (19) sur le deuxième arbre cannelé (33).

On notera que la deuxième roue (19) et son support (27) présentent les mêmes caractéristiques de fixation que la troisième roue (20) et son support (30) ce qui permet avantageusement de permuter lesdites roues (19, 20) pour changer la vitesse de rotation de l'élément rotatif (8) tout en gardant la même vitesse de rotation de la première roue (18).

A cet effet, la troisième roue (20) comporte également un moyeu cannelé (39) et le troisième support (30) comporte un troisième arbre cannelé (40) d'axe longitudinal (40a) au moins sensiblement parallèle aux axes longitudinaux (15a, 33a) sur lequel est monté ladite troisième roue (20). Un troisième élément d'arrêt (42) qui est, selon l'exemple de réalisation représenté, une vis (43) d'axe longitudinal (43a) confondu avec l'axe longitudinal (40a) du troisième arbre cannelé (40) est vissé dans ce dernier. Cette vis (43) est destinée à fixer axialement la troisième roue (20) sur le troisième arbre cannelé (40).

On notera que le moyeu cannelé (32) de la deuxième roue (19) comporte le même nombre et le même type de cannelures que le moyeu cannelé (39) de la troisième roue (20), tout comme le deuxième arbre cannelé (33) comporte le même nombre le même type de cannelures que le troisième arbre cannelé (40).

Une telle conception permet, comme décrit précédemment, de permuter rapidement de manière simple, ladite deuxième roue (19) avec la troisième roue (20) pour changer la vitesse de rotation de l'élément rotatif (8) à partir d'une vitesse de rotation de la première roue (18) donnée, laquelle vitesse de rotation dépend directement du véhicule moteur (3).

A cet effet, on remarquera que la deuxième roue (19) est diamétralement plus grande que la première roue (18) ce qui permet de réduire la vitesse de rotation de l'élément rotatif (8) par rapport à la vitesse de rotation des organes de coupe (7), en l'occurrence la vitesse de rotation de l'arbre d'entrée (15) du deuxième boîtier de renvoi (16).

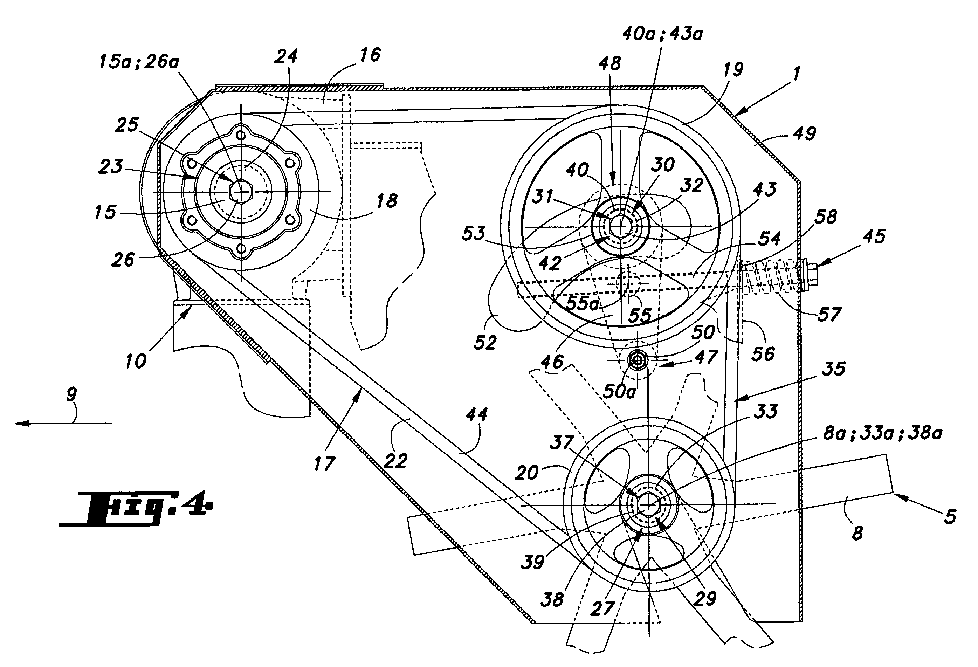

L'opérateur a également la possibilité d'augmenter quelque peu la vitesse de l'élément rotatif (8) tout en gardant une vitesse de rotation de ce dernier inférieure à celle de l'arbre d'entrée (15). Pour ce faire, la troisième roue (20) est diamétralement plus petite que la deuxième roue (19) et est diamétralement plus grande que la première roue (18) et ladite troisième roue (20) devra être permutée avec ladite deuxième roue (19) tel que représenté sur la figure 4. La permutation desdites roues (19, 20) sera expliquée plus en détail ultérieurement.

Il convient encore de noter que l'élément de transmission (22) de la transmission sans fin (17) est, selon l'exemple de réalisation représenté, composé de trois courroies trapézoïdales (44) et que chaque roue (18, 19, 20) est composée d'une poulie apte à recevoir lesdites courroies trapézoïdales (44).

A la lumière des figures 3 et 4 on voit en outre que le deuxième arbre cannelé (33) est situé derrière l'arbre d'entrée (15) et en-dessous de celui-ci. Le troisième arbre cannelé (40) quant à lui est situé, selon l'exemple de réalisation représenté, plus bas que l'arbre d'entrée (15) et plus haut que le deuxième arbre cannelé (33), en arrière par rapport audit arbre d'entrée (15) et devant le deuxième arbre cannelé (33). Selon une vue de dessus (figure 1), on comprendra bien entendu que les trois roues (18, 19, 20) sont alignées de manière à assurer une bonne transmission du mouvement.

On notera encore que la première roue (18) fixée sur l'arbre d'entrée (15) est motrice, et que la deuxième roue (19) ou la troisième roue (20) fixée sur le deuxième arbre cannelé (33) est réceptrice, la deuxième ou la troisième roue (19, 20) fixée sur le troisième arbre cannelé (40) est quant à elle destinée à tendre l'élément de transmission (22).

A cet effet, le troisième support (30) peut être déplacé par rapport au premier et au deuxième support (23, 27) au moyen d'un dispositif tendeur (45) destiné à assurer la tension de l'élément de transmission (22). Ce dispositif tendeur (45) comporte, selon l'exemple de réalisation représenté, un bras (46) lié à l'une (47) de ces extrémités (47, 48) d'une part à une paroi (49) au moyen d'une articulation cylindrique (50) d'axe longitudinal (50a) et guidé à l'autre (48) de ces extrémités (47, 48) dans un trou oblong (52) qui est centré par rapport à ladite articulation cylindrique (50). A cette autre extrémité (48) du bras (46) est lié le troisième arbre cannelé (40) au moyen d'une autre articulation cylindrique (53) de manière à permettre à ce dernier de tourner librement autour de l'axe longitudinal (40a).

Ce dispositif tendeur (45) comporte en sus une vis de tension (54) vissée d'une part dans un tourillon (55) d'axe longitudinal (55a) sensiblement parallèle à l'axe longitudinal (40a) et lié de manière pivotante au bras (46) et prenant appui d'autre part sur un support (56) fixe par l'intermédiaire d'un ressort de compression (57). Ce ressort de compression permet avantageusement de freiner la vis de tension (54) et d'avoir une certaine souplesse au niveau de la tension des courroies trapézoïdales (44). On remarquera que le support (56) comporte, au niveau de la vis de tension (54), une découpe (58) dirigée vers le haut, permettant si nécessaire, de pivoter ladite vis de tension (54) vers le haut autour de l'axe longitudinal (55a) du tourillon (55).

Lorsque l'opérateur souhaite permuter les roues (19, 20), il détend dans un premier temps les courroies trapézoïdales (44) en dévissant la vis de tension (54) et en pivotant celle-ci vers le haut autour de l'axe longitudinal (55a) ce qui permet de basculer ensuite le bras (46) avec le troisième arbre cannelé (40) et la troisième roue (20) qu'il contient vers le bas (figure 3). Les courroies trapézoïdales (44) sont détendues et peuvent être déposées. Ensuite, sur la base de la figure 3, l'opérateur dévisse et retire les deux vis (38, 43) fixant respectivement la deuxième roue (19) sur le deuxième arbre cannelé (33) et la troisième roue (20) sur le troisième arbre cannelé (40). Puis l'opérateur dépose ladite deuxième roue (19) et ladite troisième roue (20) en les retirant de leurs arbres cannelés (33, 40) respectifs. Ensuite, l'opérateur place la deuxième roue (19) sur le troisième arbre cannelé (40) et la troisième roue (20) sur le deuxième arbre cannelé (33) et les fixe axialement au moyen des vis (38, 43) tel que représenté sur la figure 4. Pour finir, l'opérateur remet en place les courroies trapézoïdales (44) pour ensuite les tendre avec le dispositif tendeur (45) en basculant le bras (46) avec le troisième arbre cannelé (40) et la deuxième roue (19) vers le haut autour de l'axe longitudinal (50a) jusqu'à ce que la vis de tension (54) puisse être ramenée au niveau du support (56) et être vissée d'avantage dans le tourillon (55) jusqu'à ce que lesdites courroies trapézoïdales (44) soient correctement tendues.

Selon cette seconde forme d'agencement telle que représentée sur la figure 4, avec la même vitesse de rotation de la première roue (18), la vitesse de rotation du deuxième arbre cannelé (33) (donc de l'élément rotatif (8)) a été augmentée par rapport à la première forme d'agencement (figure 3) tout en restant inférieure à la vitesse de rotation de la première roue (18) et sans pour autant avoir fait appel à une roue supplémentaire.

Lorsque l'opérateur souhaite de nouveau réduire la vitesse de rotation de l'élément rotatif (8), il permute de nouveau la deuxième et la troisième roue (19, 20) en procédant de la manière inverse à celle décrite précédemment de sorte à revenir à la première forme d'agencement telle que représentée sur la figure 3.

Finalement, diverses modifications peuvent être apportées à l'exemple qui vient d'être décrit, notamment en ce qui concerne la constitution des divers éléments ou par substitution d'équivalents techniques, sans pour autant sortir du domaine de protection.

C'est ainsi qu'il est parfaitement possible que l'élément de transmission (22) de la transmission sans fin (17) soit composé d'une courroie unique.

Il est également parfaitement envisageable de remplacer la transmission sans fin (17) à courroies trapézoïdales (44) par une transmission sans fin à courroie crantée ou encore par une transmission sans fin à chaîne(s).

Il est encore parfaitement possible d'imaginer un dispositif de traitement muni de deux éléments contrarotatifs, un des éléments rotatifs pouvant être entraîné par la transmission sans fin (17) et l'autre élément rotatif étant entraîné par une autre transmission prenant par exemple le mouvement à partir du premier élément rotatif.

Enfin, on notera encore que la machine de coupe (1) peut parfaitement être constituée d'une machine de coupe traînée reposant partiellement au sol au moyen de roues.

## Revendications

1. Machine de coupe comportant
- une structure d'attelage (2) au moyen de laquelle elle est destinée à être liée à un véhicule moteur (3);
- un mécanisme de coupe (4) comportant des organes de coupe (7);
- un dispositif de traitement (5) destiné à traiter le produit coupé par ledit mécanisme de coupe (4) et comprenant au moins un élément rotatif (8) ;
- un dispositif d'entraînement (10) destiné à entraîner ledit au moins un élément rotatif (8) et comprenant une transmission sans fin (17) laquelle comporte :
• une première roue (18) ;
• une deuxième roue (19) ;
• au moins un élément de transmission (22) assurant la transmission de la première roue (18) à la deuxième roue (19) et
• une troisième roue (20) permettant d'assurer la tension dudit au moins un élément de transmission (22) ;
chaque roue (18, 19, 20) étant fixée à un support (23, 27, 30) correspondant, ***caractérisée en ce* que** la troisième roue (20) et son support (30) correspondant présentent les mêmes caractéristiques de fixation que la première roue (18) et / ou la deuxième roue (19) et son / leur support (23, 27) correspondant de manière que lesdites roues (18, 19, 20 ; 18, 20 ; 19, 20) concernées puissent être permutées.

2. Machine de coupe selon la revendication 1, ***caractérisée en ce* que** au moins les moyens de fixation (29, 31) liant la deuxième roue (19) et la troisième roue (20) au support (27, 30) correspondant permettent un démontage et un remontage rapide desdites roues (19, 20) de / sur leur support (27, 30).

3. Machine de coupe selon la revendication 1 ou 2, ***caractérisée en ce* qu'**il est prévu un élément d'arrêt (25, 37, 42) par roue (18, 19, 20) permettant de maintenir ladite roue (18, 19, 20) sur le support (23, 27, 30) correspondant.

4. Machine de coupe selon l'une quelconque des revendications 1 à 3, ***caractérisée en ce* qu'**au moins la deuxième roue (19) et la troisième roue (20) comportent un moyeu cannelé (32, 39) respectif et que le deuxième support et le troisième support (27, 30) comportent un arbre cannelé (33, 40) respectif.

5. Machine de coupe selon la revendication 4, ***caractérisée en ce* qu'**au moins le moyeu cannelé (32) de la deuxième roue (19) comporte le même nombre et le même type de cannelures que le moyeu cannelé (39) de la troisième roue (20).

6. Machine de coupe selon la revendication 4 ou 5, ***caractérisée en ce* qu'**au moins le deuxième arbre cannelé (33) comporte le même nombre et le même type de cannelures que le troisième arbre cannelé (40).

7. Machine de coupe selon l'une quelconque des revendications 1 à 6, ***caractérisée en ce* que** la troisième roue (20) est diamétralement plus petite que la deuxième roue (19) et diamétralement plus grande que la première roue (18).

8. Machine de coupe selon l'une quelconque des revendications 4 à 7, ***caractérisée en ce* que** l'axe longitudinal (33a) du deuxième arbre cannelé (33) est confondu avec l'axe longitudinal (8a) dudit au moins un élément rotatif (8).

9. Machine de coupe selon l'une quelconque des revendications 1 à 8, ***caractérisée en ce* que** le troisième support (30) peut être déplacé par rapport aux deux autres supports (23, 27) au moyen d'un dispositif tendeur (45) de manière à assurer la tension dudit au moins un élément de transmission (22).

10. Machine de coupe selon l'une quelconque des revendications 4 à 9, ***caractérisée en ce* que** la première roue (18) est motrice, la deuxième roue (19) ou la troisième roue (20) fixée sur le deuxième arbre cannelé (33) est réceptrice, et la deuxième roue (19) ou la troisième roue (20) fixée sur le troisième arbre cannelé (40) sert à tendre l'élément de transmission (22).

## Patentansprüche

1. Schneidmaschine, die
- eine Kupplungskonstruktion (2), mittels derer sie mit einem Motorfahrzeug (3) verbunden werden soll;
- einen Schneidmechanismus (4), der Schneidelemente (7) umfasst;
- eine Behandlungsvorrichtung (5), die das durch den Schneidmechanismus (4) geschnittene Gut behandeln soll und mindestens ein Drehelement (8) umfasst;
- eine Antriebsvorrichtung (10), die das mindestens eine Drehelement (8) antreiben soll und einen Endlostrieb (17) umfasst, der
• ein erstes Rad (18);
• ein zweites Rad (19);
• mindestens ein Übertragungselement (22), das die Übertragung vom ersten Rad (18) auf das zweite Rad (19) gewährleistet, und
• ein drittes Rad (20), das gestattet, die Spannung des mindestens einen Übertragungselements (22) zu gewährleisten;
enthält, wobei jedes Rad (18, 19, 20) an einem entsprechenden Träger (23, 27, 30) befestigt ist,
umfasst, ***dadurch gekennzeichnet,* dass** das dritte Rad (20) und sein entsprechender Träger (30) die gleichen Befestigungseigenschaften aufweisen wie das erste Rad (18) und/oder das zweite Rad (19) und sein/ihr entsprechender Träger (23, 27), so dass die betreffenden Räder (18, 19, 20; 18, 20; 19, 20) ausgetauscht werden können.

2. Schneidmaschine nach Anspruch 1, ***dadurch gekennzeichnet,* dass** zumindest die das zweite Rad (19) und das dritte Rad (20) mit dem entsprechenden Träger (27, 30) verbindenden Befestigungsmittel (29, 31) ein schnelles Demontieren und erneutes Montieren der Räder (19, 20) von/an ihrem Träger (27, 30) gestatten.

3. Schneidmaschine nach Anspruch 1 oder 2, ***dadurch gekennzeichnet,* dass** ein Blockierelement (25, 37, 42) pro Rad (18, 19, 20) vorgesehen ist, das das Halten des Rads (18, 19, 20) am entsprechenden Träger (23, 27, 30) gestattet.

4. Schneidmaschine nach irgend einem der Ansprüche 1 bis 3, ***dadurch gekennzeichnet,* dass** zumindest das zweite Rad (19) und das dritte Rad (20) jeweils eine entsprechende Keilnabe (32, 39) enthalten und dass der zweite Träger und der dritte Träger (27, 30) jeweils eine entsprechende Keilwelle (33, 40) enthalten.

5. Schneidmaschine nach Anspruch 4, ***dadurch gekennzeichnet,* dass** zumindest die Keilnabe (32) des zweiten Rads (19) die gleiche Kehlenanzahl und -art enthält wie die Keilnabe (39) des dritten Rads (20).

6. Schneidmaschine nach Anspruch 4 oder 5, ***dadurch gekennzeichnet,* dass** zumindest die zweite Keilwelle (33) die gleiche Kehlenanzahl und -art enthält wie die dritte Keilwelle (40).

7. Schneidmaschine nach irgend einem der Ansprüche 1 bis 6, ***dadurch gekennzeichnet,* dass** das dritte Rad (20) diametral kleiner ist als das zweite Rad (19) und diametral größer ist als das erste Rad (18).

8. Schneidmaschine nach irgend einem der Ansprüche 4 bis 7, ***dadurch gekennzeichnet,* dass** die Längsachse (33a) der zweiten Keilwelle (33) mit der Längsachse (8a) des mindestens einen Drehelements (8) zusammenfällt.

9. Schneidmaschine nach irgend einem der Ansprüche 1 bis 8, ***dadurch gekennzeichnet,* dass** der dritte Träger (30) mittels einer Spannvorrichtung (45) bezüglich der beiden anderen Träger (23, 27) verschoben werden kann, um die Spannung des mindestens einen Übertragungselements (22) zu gewährleisten.

10. Schneidmaschine nach irgend einem der Ansprüche 4 bis 9, ***dadurch gekennzeichnet,* dass** das erste Rad (18) ein Antriebsrad ist, das zweite Rad (19) oder das dritte Rad (20), das an der zweiten Keilwelle (33) befestigt ist, ein Abtriebsrad ist, und das zweite Rad (19) oder das dritte Rad (20), das an der dritten Keilwelle (40) befestigt ist, zum Spannen des Übertragungselements (22) dient.

## Claims

1. Cutting machine comprising:
- a hitching structure (2) by means of which it is intended to be connected to a motor vehicle (3);
- a cutting mechanism (4) comprising cutting elements (7);
- a treatment device (5) intended to treat the product cut by the said cutting mechanism (4) and comprising at least one rotary element (8);
- a drive device (10) intended to drive the said at least one rotary element (8) and comprising an endless transmission (17) which comprises:
• a first wheel (18);
• a second wheel (19);
• at least one transmission element (22) providing transmission from the first wheel (18) to the second wheel (19); and
• a third wheel (20) for tensioning the said at least one transmission element (22);
each wheel (18, 19, 20) being fixed to a corresponding support (23, 27, 30),
***characterized in* that** the third wheel (20) and its corresponding support (30) have the same fixing characteristics as the first wheel (18) and/or the second wheel (19) and its/their corresponding support (23, 27) so that the said wheels (18, 19, 20; 18, 20; 19, 20) in question can be interchanged with each other.

2. Cutting machine according to Claim 1, ***characterized in* that** at least the fixing means (29, 31) connecting the second wheel (19) and the third wheel (20) to the corresponding support (27, 30) allow the said wheels (19, 20) to be removed and refitted from/onto their support (27, 30) quickly.

3. Cutting machine according to Claim 1 or 2, ***characterized in* that** there is one stop element (25, 37, 42) per wheel (18, 19, 20) allowing the said wheel (18, 19, 20) to be held on the corresponding support (23, 27, 30).

4. Cutting machine according to any one of Claims 1 to 3, ***characterized in* that** at least the second wheel (19) and the third wheel (20) have a respective splined hub (32, 39) and **in that** the second support and the third support (27, 30) have a respective splined shaft (33, 40).

5. Cutting machine according to Claim 4, ***characterized in* that** at least the splined hub (32) of the second wheel (19) has the same number and the same type of splines as the splined hub (39) of the third wheel (20).

6. Cutting machine according to Claim 4 or 5, ***characterized in* that** at least the second splined shaft (33) has the same number and the same type of splines as the third splined shaft (40).

7. Cutting machine according to any one of Claims 1 to 6, ***characterized in* that** the third wheel (20) is diametrically smaller than the second wheel (19) and diametrically larger than the first wheel (18).

8. Cutting machine according to any one of Claims 4 to 7, ***characterized in* that** the longitudinal axis (33a) of the second splined shaft (33) is coincident with the longitudinal axis (8a) of the said at least one rotary element (8).

9. Cutting machine according to any one of Claims 1 to 8, ***characterized in* that** the third support (30) can be moved with respect to the other two supports (23, 27) by means of a tensioning device (45) so as to tension the said at least one transmission element (22).

10. Cutting machine according to any one of Claims 4 to 9, ***characterized in* that** the first wheel (18) is a driving wheel, the second wheel (19) or the third wheel (20) fixed to the second splined shaft (33) is a receiving wheel, and the second wheel (19) or the third wheel (20) fixed on the third splined shaft (40) is used to tension the transmission element (22).
